# EUROPEAN PATENT APPLICATION

(11) **EP 4 517 331 A1**
(43) Date of publication of application: **05.03.2025**
(21) Application number: 24197986.3
(22) Date of filing: 02.09.2024
(51) Int. Cl.: G01N 35/04, B01L 3/00

(54) **AUTOMATIC ANALYZING APPARATUS**

(30) Priority: 04.09.2023 JP 2023143032
(71) Applicant: Canon Medical Systems Corporation, Tochigi 324-0036 (JP)
(72) Inventor: FUJIWARA, Takafumi, Otawara-shi, 324-0036 (JP); OMORI, Takahiro, Otawara-shi, 324-0036 (JP)
(74) Representative: Marks & Clerk LLP

(57) **Abstract**

According to one embodiment, an automatic analyzing apparatus includes an adapter, an input unit, a reagent storage, and a transfer mechanism. The adapter attachable to a reagent container. The input unit receives an adapter-attached reagent container, the adapter-attached reagent container being the reagent container to which the adapter is attached. The reagent storage stores the adapter-attached reagent container. The transfer mechanism transfers the adapter-attached reagent container from the input unit to the reagent storage using the adapter.

## Description

### FIELD

Embodiments described herein relate generally to an automatic analyzing apparatus.

### BACKGROUND

Conventionally, there is known an automatic analyzing apparatus having a mechanism (automatic reagent loading mechanism) that allows a reagent container (reagent bottle) to be charged into a charging unit (an input unit) of the automatic analyzing apparatus to automatically transfer the reagent bottle from the input unit to a reagent storage. The automatic reagent loading mechanism can automatically transfer the reagent bottle from the reagent storage to the input unit even in a case where the reagent bottle is taken out.

In the automatic analyzing apparatus having the automatic reagent loading mechanism, a general-purpose reagent bottle (general-purpose reagent bottle) common to each company cannot be used, and it is essential to use a dedicated reagent bottle (dedicated reagent bottle) for each manufacturer of the automatic analyzing apparatus.

### SUMMARY

Examples in accordance with embodiments are set out below.
(1) An automatic analyzing apparatus comprising:
   an adapter attachable to a reagent container;
   an input unit configured to receive an adapter-attached reagent container, the adapter-attached reagent container being the reagent container to which the adapter is attached;
   a reagent storage configured to store the adapter-attached reagent container; and
   a transfer mechanism configured to transfer the adapter-attached reagent container from the input unit to the reagent storage using the adapter.
(2) The adapter may include a handle portion, and
   the transfer mechanism may further transfer the adapter-attached reagent container from the input unit to the reagent storage using the handle portion.
(3) The handle portion may be provided on a side surface of the adapter, and
   the transfer mechanism may further transfer the adapter-attached reagent container from the input unit to the reagent storage by hooking and holding the adapter onto the handle portion.
(4) The transfer mechanism may further transfer the adapter-attached reagent container from the input unit to the reagent storage by lifting up or sliding the adapter-attached reagent container using the adapter.
(5) The adapter may include a protrusion provided to protrude from an upper surface facing a surface on which the adapter-attached reagent container is placed, and
   the transfer mechanism may further grip the protrusion and holds the adapter to transfer the adapter-attached reagent container from the input unit to the reagent storage.
(6) The transfer mechanism may further transfer the adapter-attached reagent container from the input unit to the reagent storage by lifting up or sliding the adapter.
(7) The transfer mechanism may further adsorb an upper surface facing a surface on which the adapter-attached reagent container is placed and hold the adapter-attached reagent container to transfer the adapter-attached reagent container from the input unit to the reagent storage.
(8) The transfer mechanism may further transfer the adapter-attached reagent container from the input unit to the reagent storage by lifting up or sliding the adapter-attached reagent container.
(9) The transfer mechanism may further transfer the adapter-attached reagent container from the input unit to the reagent storage by sliding the adapter-attached reagent container using a conveyor.
(10) The transfer mechanism may further transfer the adapter-attached reagent container from the reagent storage to the input unit using the adapter.
(11) At least one side surface of the reagent container may comprise a code associated with information on a reagent,
   the adapter may include an opening on at least one side surface, and
   the opening may be located at a position corresponding to the code of the reagent container in a state where the reagent container is attached to the adapter.
(12) The transfer mechanism may include a code reader for reading the code.
(13) The input unit may further receive a transport tool that transports a plurality of reagent containers, and
   the transfer mechanism may further transfer the transport tool from the input unit to a transport tool shuttle for transporting the transport tool to an arbitrary position.
(14) The reagent container may comprise a general-purpose reagent bottle.
(15) The transfer mechanism may include an arm that locks with the adapter, and a positioner that transports the adapter-attached reagent container.
(16) An adapter attachable to a reagent container, the adapter being used by being incorporated into an automatic analyzing apparatus including an input unit configured to receive the reagent container, a reagent storage configured to store the reagent container, and a transfer mechanism configured to transfer the reagent container from the input unit to the reagent storage, the adapter comprising:
   a held portion held by the transfer mechanism, wherein
   the adapter is attached to the reagent container in such a manner that the transfer mechanism can hold the reagent container using the held portion and transfer the reagent container from the input unit to the reagent storage.
(17) The held portion may comprise a handle portion, and
   an adapter-attached reagent container may be transferred from the input unit to the reagent storage using the handle portion by the transfer mechanism, the adapter-attached reagent container being the reagent container to which the adapter is attached.
(18) The handle portion may be provided on a side surface of the adapter, and
   the adapter-attached reagent container may be transferred from the input unit to the reagent storage by the transfer mechanism holding the adapter by locking with the handle portion.
(19) The held portion may comprise a protrusion,
   the protrusion may be provided to protrude from an upper surface facing a surface on which the adapter-attached reagent container is placed, and
   the adapter-attached reagent container may be transferred from the input unit to the reagent storage by the transfer mechanism gripping the protrusion and holding the adapter.
(20) The adapter may include an opening on at least one side surface, and
   the opening may be located at a position corresponding to a code associated with information on a reagent added to the reagent container in a state where the reagent container is attached to the adapter.

### BRIEF DESCRIPTION OF THE DRAWINGS

FIG. 1 is a block diagram illustrating an example of an automatic analyzing apparatus according to a first embodiment.
FIG. 2 is a diagram illustrating a configuration example of an analysis mechanism of FIG. 1.
FIG. 3 is a perspective view illustrating an example of a configuration of a reagent bottle according to the first embodiment.
FIG. 4 is a three-view diagram illustrating an example of an appearance of a general-purpose reagent bottle in the first embodiment.
FIG. 5 is a three-view diagram illustrating an example of an appearance of another general-purpose reagent bottle in the first embodiment.
FIG. 6 is a three-view diagram illustrating an example of an appearance of a general-purpose reagent bottle adapter in the first embodiment.
FIG. 7 is a schematic diagram illustrating an example of the configuration of the general-purpose reagent bottle and the general-purpose reagent bottle adapter in the first embodiment.
FIG. 8 is a three-view diagram illustrating an example of an appearance of the reagent bottle in the first embodiment.
FIG. 9 is a cross-sectional view of a cross section taken along line AA in FIG. 8 as viewed from a vertical direction.
FIG. 10 is a schematic top view of an automatic loading mechanism illustrating automatic reagent loading in the first embodiment.
FIG. 11 is a schematic view of a cross section taken along line BB in FIG. 10 as viewed from the vertical direction.
FIG. 12 is a schematic top view of the automatic loading mechanism for locking an arm and the reagent bottle according to the first embodiment.
FIG. 13 is a schematic view of a cross section taken along line CC in FIG. 12 as viewed from the vertical direction.
FIG. 14 is a schematic diagram illustrating vertical movement of the arm in FIG. 13.
FIG. 15 is a schematic top view of the automatic loading mechanism for rotational movement of the arm that locks the reagent bottle according to the first embodiment.
FIG. 16 is a schematic diagram of a cross section taken along line DD in FIG. 15 as viewed from the vertical direction.
FIG. 17 is a schematic top view of the automatic loading mechanism for movement of a positioner holding the reagent bottle according to the first embodiment.
FIG. 18 is a schematic diagram illustrating an automatic loading mechanism in a first modification of the first embodiment.
FIG. 19 is a schematic diagram illustrating an automatic loading mechanism in a second modification of the first embodiment.
FIG. 20 is a schematic diagram illustrating an automatic loading mechanism in a third modification of the first embodiment.
FIG. 21 is a schematic diagram illustrating an automatic loading mechanism in a fourth modification of the first embodiment.

### DETAILED DESCRIPTION

In general, according to one embodiment, an automatic analyzing apparatus includes an adapter, an input unit, a reagent storage, and a transfer mechanism. The adapter attachable to a reagent container. The input unit receives an adapter-attached reagent container, the adapter-attached reagent container being the reagent container to which the adapter is attached. The reagent storage stores the adapter-attached reagent container. The transfer mechanism transfers the adapter-attached reagent container from the input unit to the reagent storage using the adapter.

Hereinafter, an embodiment of an automatic analyzing apparatus will be described in detail with reference to the drawings.

### (First Embodiment)

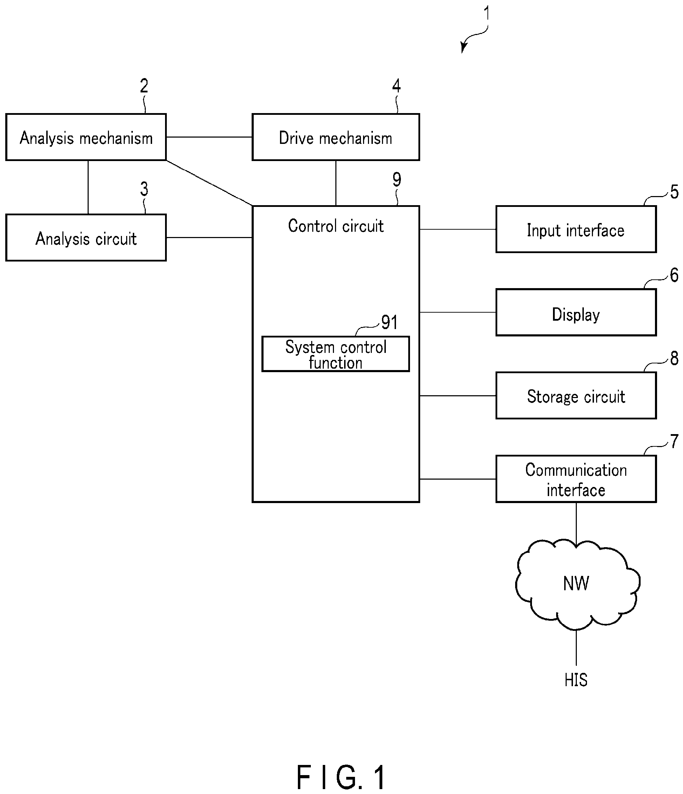

FIG. 1 is a block diagram illustrating an example of an automatic analyzing apparatus according to a first embodiment. For example, as illustrated in FIG. 1, an automatic analyzing apparatus 1 according to the first embodiment includes an analysis mechanism 2, an analysis circuit 3, a drive mechanism 4, an input interface 5, a display 6, a communication interface 7, a storage circuit 8 (storage unit), and a control circuit 9 (control unit).

The analysis mechanism 2 mixes a sample such as a standard sample or a test sample with a reagent used for various test items set for the sample. The analysis mechanism 2 measures a mixed liquid of the sample and the reagent, and generates, for example, standard data and test data associated with absorbance. In addition, the analysis mechanism 2 measures the mixed liquid of the sample and the reagent, and generates, for example, standard data and test data associated with an electrode potential.

The analysis circuit 3 is a processor that generates calibration data, analysis data, and the like by analyzing the generated standard data and test data. The analysis circuit 3 reads an operation program from the storage circuit 8, and generates calibration data, analysis data, and the like according to the read operation program. For example, the analysis circuit 3 generates calibration data indicating a relationship between the standard data and a standard value set in advance for the standard sample based on the standard data. The analysis circuit 3 generates analysis data based on the test data and the calibration data of a test item corresponding to the test data. The analysis data include data in which a concentration value is associated with an activity value of an enzyme, data in which a concentration of a desired ion in a sample is recorded in time series, and the like. The analysis circuit 3 outputs the generated calibration data, analysis data, and the like to the control circuit 9.

The drive mechanism 4 drives the analysis mechanism 2 under the control of the control circuit 9. The drive mechanism 4 is realized by, for example, a gear, a stepping motor, a belt conveyor, a lead screw, and the like. For example, the drive mechanism 4 rotates a reaction disk 104 to be described later at a predetermined rotation angle. The predetermined rotation angle is, for example, an angle of rotation in one cycle to be described later. Further, the drive mechanism 4 rotates a reagent rack of a reagent storage 102 to be described later.

For example, the input interface 5 receives setting of an analysis parameter or the like of each test item related to the sample of which measurement is requested through an in-hospital network NW by the operation of an operator. The input interface 5 is realized by, for example, a mouse, a keyboard, a touch pad to which an instruction is input by touching an operation surface, and the like. The input interface 5 is connected to the control circuit 9, converts an operation instruction input from the operator into an electric signal, and outputs the electric signal to the control circuit 9.

Note that, in the present specification, the input interface 5 is not limited to one including physical operation components such as a mouse and a keyboard. For example, the input interface 5 may be a processing circuit that receives an electric signal corresponding to an operation instruction input from an external input device provided separately from the automatic analyzing apparatus 1 and outputs the electric signal to the control circuit 9.

The display 6 is connected to the control circuit 9 and displays data representing a display target received from the control circuit 9. The display 6 corresponds to, for example, a CRT display, a liquid crystal display, an organic EL display, an LED display, a plasma display, and the like.

Note that the display 6 may be equipped with a touch panel. In this case, the display 6 may have the function of the input interface 5.

The communication interface 7 is connected to, for example, the in-hospital network NW. The communication interface 7 performs data communication with a hospital information system (HIS) through the in-hospital network NW. Note that the communication interface 7 may perform data communication with the HIS through an inspection department system connected to the in-hospital network NW.

The storage circuit 8 includes a recording medium readable by a processor, such as a magnetic recording medium, an optical recording medium, or a semiconductor memory. Note that the storage circuit 8 is not necessarily realized by a single storage apparatus. For example, the storage circuit 8 may be realized by a plurality of storage apparatuses.

In addition, the storage circuit 8 stores a test order input from the operator, a test order received through the in-hospital network NW by the communication interface 7, or the like. The order information includes a sample ID (reagent name), a test item required for a sample to be measured, and a measurement order regarding the test. The storage circuit 8 stores various setting values for executing a series of operations of each unit of the automatic analyzing apparatus 1 in one cycle. The storage circuit 8 stores an operation program read by the control circuit 9.

The control circuit 9 is a processor that functions as a center of the automatic analyzing apparatus 1. For example, the control circuit 9 outputs a control signal for driving each unit of the analysis mechanism 2 to the drive mechanism 4. The control circuit 9 realizes a function corresponding to the operation program by executing the operation program stored in the storage circuit 8. The control circuit 9 may include a memory that stores at least part of the data stored in the storage circuit 8. The function of the control circuit 9 according to the first embodiment will be described later.

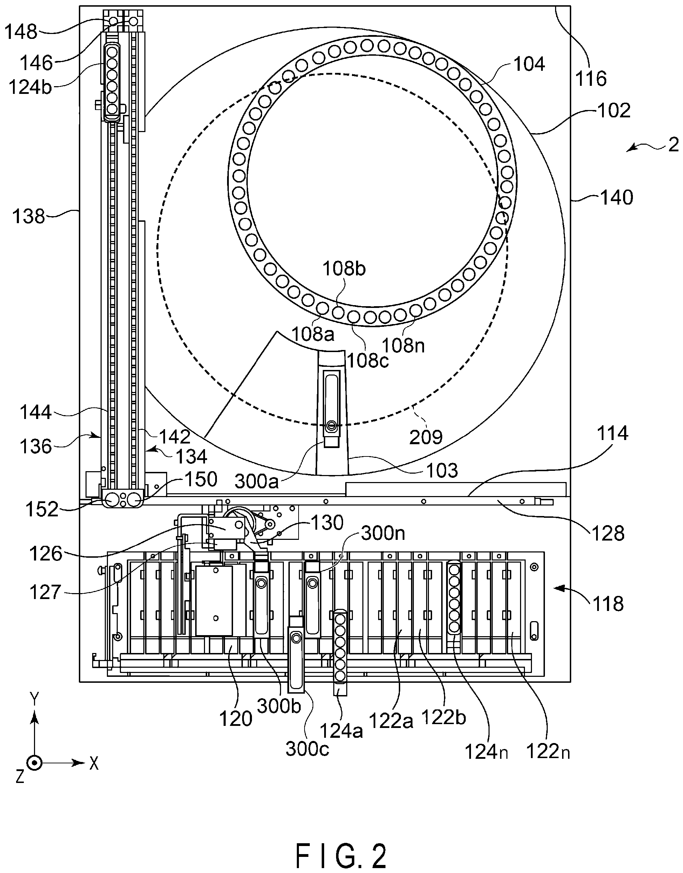

FIG. 2 is a diagram illustrating a configuration example of an analysis mechanism of FIG. 1. FIG. 2 is a top view of the analysis mechanism 2. The analysis mechanism 2 includes the reagent storage 102, a reaction disk 104, an input unit 118, and a positioner 126. The reagent storage 102 and the reaction disk 104 are disposed in a first region, and the input unit 118 is disposed in a second region.

In FIG. 2, the first region is defined by a first side surface 114 and a second side surface 116 extending in an X direction which is a horizontal direction in a case where the automatic analyzing apparatus 1 is installed, and a third side surface 138 and a fourth side surface 140 extending in a Y direction which is a depth direction in a case where the automatic analyzing apparatus 1 is installed. The first side surface 114 and the second side surface 116 face each other, and the third side surface 138 and the fourth side surface 140 face each other. In addition, the second region is adjacent to the first region and is on the front side of the automatic analyzing apparatus 1 with the first side surface 114 as a boundary.

The reagent storage 102 and the reaction disk 104 have different rotation axes as driving units. In addition, the reaction disk 104 is disposed above (in a Z direction) the reagent storage 102 at a distance. In a case where the analysis mechanism 2 is viewed from above, at least a part of the installation range of the reaction disk 104 overlaps the installation range of the reagent storage 102. The reagent storage 102 and the reaction disk 104 may be arranged adjacent to each other, for example, on the same plane.

The reagent storage 102 cools a plurality of reagent bottles 300a to 300n (n is an arbitrary number) storing a reagent that reacts with a predetermined component included in the standard sample or a predetermined component included in the test sample. In the example of FIG. 2, the reagent bottle 300a, a reagent bottle 300b, a reagent bottle 300c, and the reagent bottle 300n are illustrated. Hereinafter, in a case where any one of the plurality of reagent bottles 300a to 300n is not specified, the reagent bottle is simply referred to as a reagent bottle 300. For example, since the reaction disk 104 is disposed above the reagent storage 102, it is structurally difficult for the operator to directly access the reagent storage 102 regardless of whether the apparatus is operating or stopped. The structure that makes it difficult to directly access is a structure in which the operator cannot easily take the reagent bottle 300 in and out of the reagent storage 102 by himself or herself. An opening 103 that can be opened and closed is provided in an upper portion of the reagent storage 102. An automatic loading mechanism described later takes the reagent bottle 300 in and out through the opening 103. In the reagent storage 102, a reagent rack is rotatably provided. The reagent rack holds the plurality of reagent bottles 300a to 300n arranged in an annular shape. The reagent rack is rotated by the drive mechanism 4.

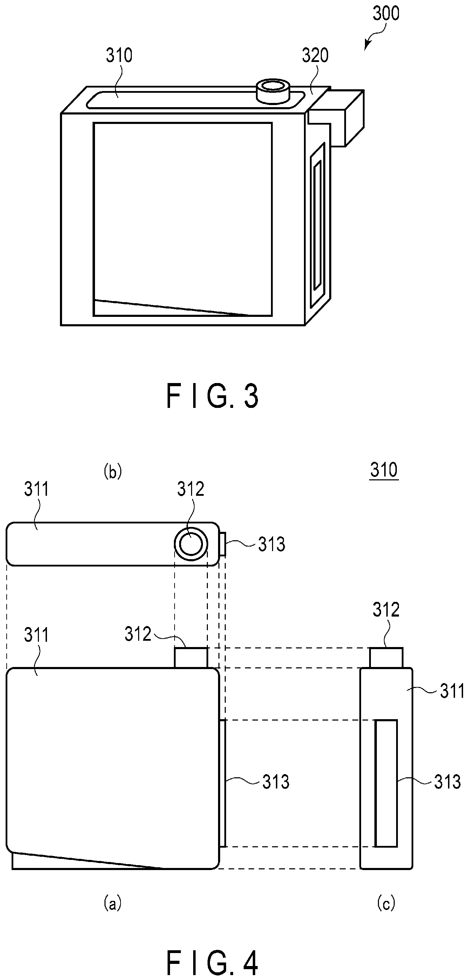

Each of the plurality of reagent bottles 300a to 300n has at least one kind of reagent. In the case of a reagent bottle (combination bottle) having two types of reagents, it is assumed that one container (first container) contains a first reagent and the other container (second container) contains a second reagent paired with the first reagent. In the present specification, a case of a reagent bottle having one kind of reagent will be described. In addition, a code (reagent code) associated with information (reagent bottle information) such as a reagent name and a bottle type is added (for example, pasted or printed) to each of the plurality of reagent bottles 300a to 300n. Examples of the code include a barcode, a two-dimensional barcode, and a radio tag (IC tag and a radio frequency identification (RFID) tag). Hereinafter, the reagent bottle 300 in the present embodiment will be described with reference to FIGS. 3 to 9.

FIG. 3 is a perspective view illustrating an example of a configuration of the reagent bottle 300 in the first embodiment. For example, as illustrated in FIG. 3, the reagent bottle 300 in the first embodiment is formed by integrating a general-purpose reagent bottle 310 and a general-purpose reagent bottle adapter 320. The general-purpose reagent bottle 310 is a reagent bottle that can be commonly used by companies that manufacture automatic analyzing apparatuses. The general-purpose reagent bottle adapter 320 can realize automatic reagent loading in the automatic analyzing apparatus 1 according to the first embodiment by being attached to the general-purpose reagent bottle 310. In other words, the general-purpose reagent bottle adapter 320 is an adapter that can be attached to the general-purpose reagent bottle 310 used by being incorporated into the automatic analyzing apparatus 1.

Note that, in the reagent bottle 300 of FIG. 3, the general-purpose reagent bottle 310 having the maximum dimension that can be attached to the general-purpose reagent bottle adapter 320 is illustrated, but the present invention is not limited thereto. For example, the general-purpose reagent bottle 310 may be sized no greater than the maximum dimension. In a case where the general-purpose reagent bottle 310 having a size equal to or smaller than the maximum dimension is used, a bottle guide for adjusting the dimension together with the general-purpose reagent bottle 310 may be attached to the general-purpose reagent bottle adapter 320. The general-purpose reagent bottle adapter 320 may be a multi-adapter to which a plurality of sizes of general-purpose reagent bottles 310 can be attached.

FIG. 4 is a three-view diagram illustrating an example of an appearance of the general-purpose reagent bottle 310 in the first embodiment. In FIG. 4, (a) illustrates a front view, (b) illustrates a top view, and (c) illustrates a side view. Note that the front view is a surface having the largest projected area with respect to the general-purpose reagent bottle 310.

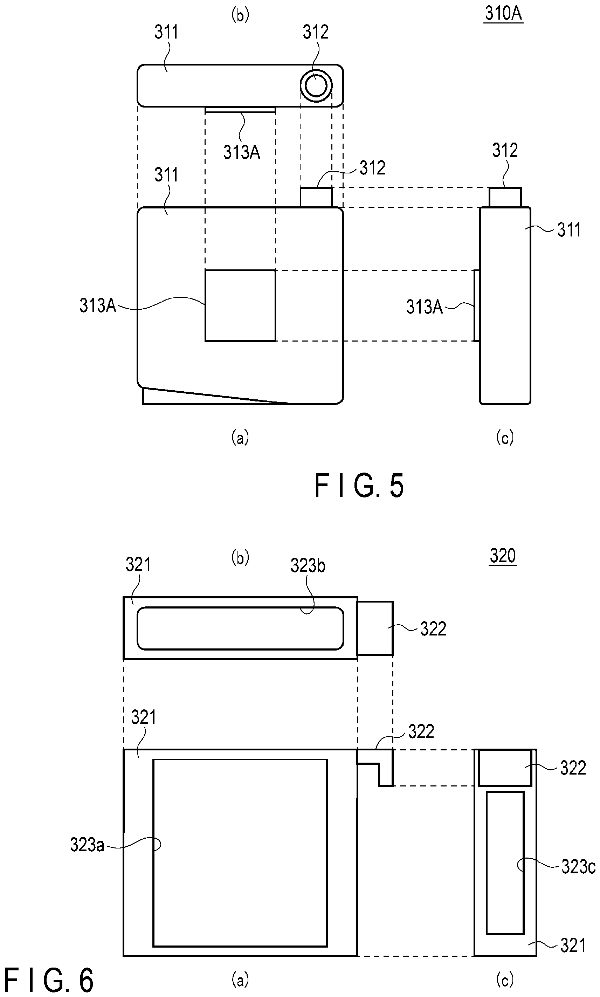

The general-purpose reagent bottle 310 includes a container body 311, an opening 312, and a code 313. The opening 312 is provided on an upper surface of the container body 311 and serves as an inlet/outlet of a reagent dispensing probe. The code 313 is provided, for example, on a side surface of the container body 311. Note that at least one code 313 may be provided on any surface of the container body 311. For example, an example in which a code is provided on a front surface of the container body 311 will be described with reference to FIG. 5.

FIG. 5 is a three-view diagram illustrating an example of an appearance of another general-purpose reagent bottle 310A in the first embodiment. In FIG. 5, (a) illustrates a front view, (b) illustrates a top view, and (c) illustrates a side view. Note that the front view is a surface having the largest projected area with respect to a general-purpose reagent bottle 310A.

The general-purpose reagent bottle 310A includes the container body 311, the opening 312, and a code 313A. A difference from the general-purpose reagent bottle 310 in FIG. 4 is that the code 313A is provided on the front surface of the container body.

FIG. 6 is a three-view diagram illustrating an example of an appearance of the general-purpose reagent bottle adapter 320 in the first embodiment. In FIG. 6, (a) illustrates a front view, (b) illustrates a top view, and (c) illustrates a side view. Note that the front view is a surface having the largest projected area with respect to the general-purpose reagent bottle adapter 320.

The general-purpose reagent bottle adapter 320 includes an adapter body 321 and a handle portion 322. The adapter body 321 includes, for example, an opening 323a on a front surface, an opening 323b on an upper surface, and an opening 323c on a side surface. The opening 323b is provided, for example, as a doorway for attaching and detaching the general-purpose reagent bottle 310. The opening 323c is provided to read the code 313 of the general-purpose reagent bottle 310 while the general-purpose reagent bottle adapter 320 is attached thereto. The opening 323a is not necessarily required in a case where the general-purpose reagent bottle 310 is attached to the general-purpose reagent bottle adapter 320. However, for example, in a case where the general-purpose reagent bottle 310A of FIG. 5 is used, the opening 323a may be provided to read the code 313A of the general-purpose reagent bottle 310A.

The handle portion 322 is provided on a side surface of the adapter body 321. Specifically, the handle portion 322 is formed as a hook-shaped member including a member extending outward from an upper portion of the side surface of the adapter body 321 and a member having a distal end protruding downward. The handle portion 322 locks with an automatic loading mechanism described later. Locking means stopping in relation to each other. The handle portion 322 may be formed as a concave portion on the side surface of the adapter body 321.

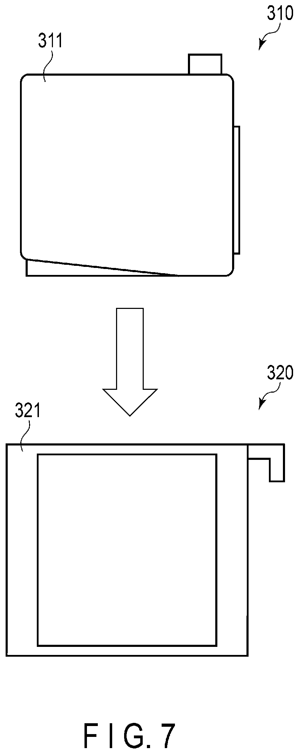

FIG. 7 is a schematic diagram illustrating an example of the configurations of the general-purpose reagent bottle 310 and the general-purpose reagent bottle adapter 320 in the first embodiment. As illustrated in FIG. 7, the reagent bottle 300 in FIG. 3 is configured by attaching the container body 311 of the general-purpose reagent bottle 310 to the adapter body 321 of the general-purpose reagent bottle adapter 320.

Although FIG. 7 illustrates an example in which the container body 311 is attached from the upper surface of the adapter body 321 (the opening 323b in FIG. 6), the present invention is not limited thereto. For example, the general-purpose reagent bottle adapter 320 may be configured such that the container body 311 is attached from the front or side surface of the adapter body 321. In addition, the general-purpose reagent bottle adapter 320 may be .configured to be divided into a plurality of parts that can be assembled, and attached by attaching the plurality of parts to the general-purpose reagent bottle 310.

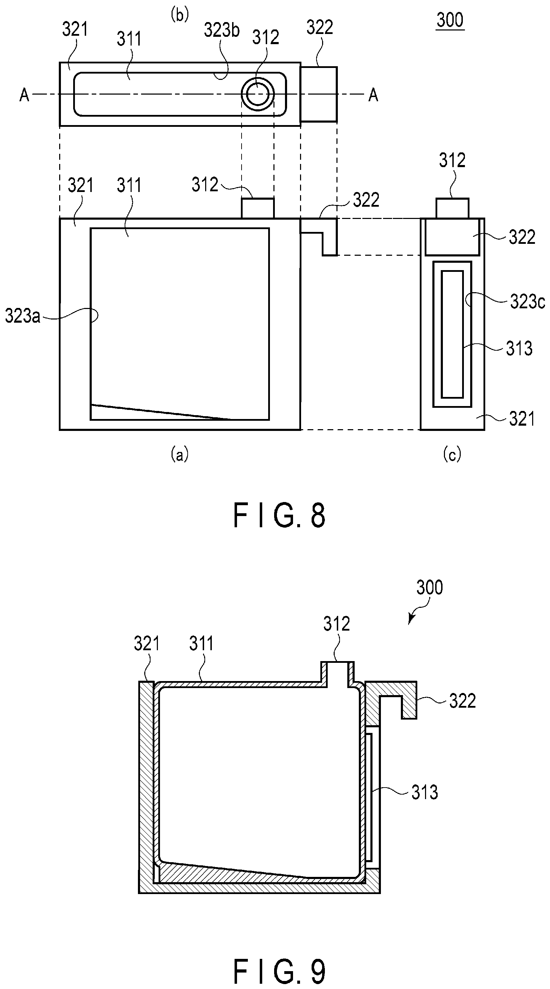

FIG. 8 is a three-view diagram illustrating an example of an appearance of the reagent bottle 300 in the first embodiment. In FIG. 8, (a) illustrates a front view, (b) illustrates a top view, and (c) illustrates a side view. Note that the front view is a surface having the largest projected area with respect to the reagent bottle 300.

As illustrated in FIG. 8, the reagent bottle 300 has a configuration in which the general-purpose reagent bottle adapter 320 is attached to the general-purpose reagent bottle 310, but the code 313 added to the general-purpose reagent bottle 310 can be read by the opening 323c of the general-purpose reagent bottle adapter 320. That is, the opening 323c is located at a position corresponding to the code 313 added to the general-purpose reagent bottle 310 in a case where the general-purpose reagent bottle 310 is attached to the general-purpose reagent bottle adapter 320. Note that the configuration of each unit of the reagent bottle 300 is similar to the configuration of the general-purpose reagent bottle 310 in FIG. 4 and the configuration of the general-purpose reagent bottle adapter 320 in FIG. 6, and thus a description thereof will be omitted. FIG. 9 illustrates a cross-sectional view of a cross section taken along line AA of FIG. 8 as viewed from the vertical direction.

The reaction disk 104 holds a plurality of reaction tubes 108a to 108n (n is an arbitrary number) arranged in a ring shape. The reaction disk 104 is alternately rotated and stopped at a predetermined time interval (hereinafter, referred to as one cycle), for example, 4.5 seconds by the drive mechanism 4. The plurality of reaction tubes 108a to 108n includes, for example, glass. Hereinafter, a path through which the reaction tubes 108a to 108n move is referred to as a reaction tube annular path.

The input unit 118 receives a plurality of transport tools 124a to 124n (n is an arbitrary number) for transporting the plurality of sample containers and the plurality of reagent bottles 300a to 300n. The input unit 118 has a mounting rack 120 having a plurality of slots 122a to 122n (n is any number) for receiving the plurality of transport tools 124a to 124n and the plurality of reagent bottles 300a to 300n. In the example of FIG. 2, the transport tool 124a, the transport tool 124n, the reagent bottle 300b, the reagent bottle 300c, and the reagent bottle 300n are inserted into any slot in the mounting rack 120. Hereinafter, in a case where any of the plurality of slots 122a to 122n is not specified, the slot is simply referred to as a slot 122, and in a case where any of the plurality of transport tools 124a to 124n is not specified, the transport tool is simply referred to as a transport tool 124. In addition, the transport tool may be referred to as a sample rack.

The transport tool 124 in FIG. 2 holds six sample containers, but the number of sample containers is not limited thereto. In addition, a code (sample code) associated with information such as a patient ID is added to each of the plurality of sample containers, for example. In addition, the transport tool 124 has an installation area substantially similar to that of the reagent bottle 300 (alternatively, a general-purpose reagent bottle adapter 320), and has a handle portion similar to that of the general-purpose reagent bottle adapter 320. The handle portion locks with an automatic loading mechanism described later.

The mounting rack 120 may include a plurality of partial racks. For example, in a case where the mounting rack 120 has 25 slots 122 as a whole, and the mounting rack 120 includes five partial racks, one partial rack has five slots. Under such a configuration, in a case where the user loads the transport tool 124 and the reagent bottle 300 into the input unit 118, the transport tool 124 and the reagent bottle 300 may be set in the partial rack in advance, and the partial rack in which the transport tool 124 and the reagent bottle 300 are set may be loaded into the input unit 118. The partial rack may be referred to as a tray.

Furthermore, the input unit 118 is provided with a positioner 126 for transporting the plurality of transport tools 124a to 124n and the plurality of reagent bottles 300a to 300n. The positioner 126 corresponds to a part of the above drive mechanism 4. The positioner 126 can move along a positioner track portion 128 provided in a longitudinal direction (X direction) of the first side surface 114. In addition, the positioner 126 includes an arm 130 that locks with a handle portion provided in each of the plurality of transport tools 124a to 124n and the plurality of reagent bottles 300a to 300n. The arm 130 is provided to be movable up and down in a vertical direction (Z direction) and to be rotatable in a horizontal direction (XY plane) by the drive mechanism 4. The combination of the positioner 126 and the arm 130 may be referred to as an "automatic loading mechanism" because the automatic sample loading and the automatic reagent loading are performed, or may be simply referred to as a "transfer mechanism". In addition, since the handle portion is a portion held by the transfer mechanism, the handle portion may be referred to as a "held portion".

The positioner 126 and the arm 130 operate to remove the plurality of transport tools 124a to 124n and the plurality of reagent bottles 300a to 300n inserted into the slots 122a to 122n and to transport the plurality of transport tools 124a to 124n and the plurality of reagent bottles 300a to 300n to various places along the positioner track portion 128 provided on the first side surface 114.

The positioner 126 includes a code reader 127 for reading a code added to each of the plurality of sample containers and the plurality of reagent bottles 300a to 300n held by each of the plurality of transport tools 124a to 124n. For example, in a case where the transport tool 124 is loaded into the input unit 118, the code reader 127 reads the sample code added to each of the plurality of sample containers held by the transport tool 124. Further, for example, in a case where the reagent bottle 300 is loaded into the input unit 118, the code reader 127 reads the reagent code added to the reagent bottle 300. The read code information (code information) is output to the control circuit 9. A plurality of code readers 127 may be provided in the positioner 126. The code reader 127 may not be provided in the positioner 126.

The analysis mechanism 2 has a first transport tool shuttle 134 and a second transport tool shuttle 136 in parallel to the third side surface 138 in the vicinity of the third side surface 138. For example, after the transport tool 124 is loaded into the input unit 118, the arm 130 of the positioner 126 locks with the transport tool 124. The transport tool 124 locked (hooked) to the arm 130 is transferred to the first transport tool shuttle 134 or the second transport tool shuttle 136 by the arm 130 moving vertically (Z direction) and rotating horizontally (XY plane), and the positioner 126 moving one-dimensionally horizontally (X direction). The transfer of the transport tool 124 after being loaded into the input unit 118 may be referred to as automatic sample loading.

The first transport tool shuttle 134 has a first track portion 142 extending from the first side surface 114 to the second side surface 116. The first track portion 142 includes, for example, a track device including a belt, a chain, and the like. The first transport tool shuttle 134 includes a first motor 146 for driving the first track portion 142, on the second side surface 116 side. The first transport tool shuttle 134 includes a first sensor 150 on the first side surface 114 side. For example, the transport tool 124 transferred to the first transport tool shuttle 134 is positioned on the first track portion 142. The first transport tool shuttle 134 may transport the transport tool 124 positioned on the first track portion 142 to any location on the first track portion 142.

The second transport tool shuttle 136 is positioned adjacent to the first transport tool shuttle 134. The second transport tool shuttle 136 includes a second track portion 144 extending from the first side surface 114 to the second side surface 116. The second track portion 144 includes, for example, a track device. The second transport tool shuttle 136 includes a second motor 148 for driving the second track portion 144, on the second side surface 116 side. The second transport tool shuttle 136 includes a second sensor 152 on the first side surface 114 side. For example, the transport tool 124 transferred to the second transport tool shuttle 136 is positioned on the second track portion 144. The second transport tool shuttle 136 may transport the transport tool 124 positioned on the second track portion 144 to any location on the second track portion 144.

The analysis mechanism 2 further includes a first pipetting mechanism, a second pipetting mechanism, and a third pipetting mechanism (none of which are illustrated). The first pipetting mechanism is a mechanism for dispensing the first reagent, and is provided, for example, in an inner peripheral region of the reagent storage 102 and an outer peripheral region of the reaction disk 104. The second pipetting mechanism is a mechanism for dispensing the second reagent, and is provided, for example, in the inner peripheral region of the reagent storage 102 and an inner peripheral region of the reaction disk 104. The third pipetting mechanism is a mechanism for dispensing a sample, and is provided, for example, in an outer peripheral region of the reagent storage 102. The positions at which the first pipetting mechanism, the second pipetting mechanism, and the third pipetting mechanism are provided are not limited to the above positions.

The first pipetting mechanism includes a first reagent dispensing arm. The first reagent dispensing arm is vertically movable and horizontally rotatable by the drive mechanism 4. The first reagent dispensing arm holds a first reagent dispensing probe at one end.

The first reagent dispensing probe rotates along an arc-shaped first rotation orbit as the first reagent dispensing arm rotates. A first reagent suction position where the first reagent dispensing probe sucks the first reagent from the reagent bottle 300 is provided on the first rotation orbit. The first reagent suction position corresponds to, for example, an intersection of the first rotation orbit and a first annular path 209. In addition, a first reagent discharge position where the first reagent sucked up by the first reagent dispensing probe is discharged to the reaction container is provided on the first rotation orbit. The first reagent discharge position corresponds to, for example, an intersection of the first rotation orbit and the reaction tube annular path. In a case where a combination bottle is used instead of the reagent bottle 300, the first reagent dispensing probe sucks up the first reagent from a first opening of the first container. In addition, the first reagent suction position of the first opening of the combination bottle coincides with the first reagent suction position of the opening of the reagent bottle 300.

Note that a cleaning position at which the first reagent dispensing probe is cleaned may be provided at a position different from the first reagent suction position and the first reagent discharge position on the first rotation orbit. In addition, a cleaning tank for cleaning the first reagent dispensing probe may be provided at the cleaning position.

Under the control of the control circuit 9, the first reagent dispensing probe sucks up the first reagent from the reagent bottle 300 located immediately below the first reagent suction position. Then, under the control of the control circuit 9, the first reagent dispensing probe discharges the sucked up first reagent to the reaction tube located immediately below the first reagent discharge position. The first reagent dispensing probe performs a series of operations (dispensing operation) of suction and discharge once in one cycle, for example.

The second pipetting mechanism includes a second reagent dispensing arm. The second reagent dispensing arm is vertically movable and horizontally rotatable by the drive mechanism 4. The second reagent dispensing arm holds a second reagent dispensing probe at one end.

The second reagent dispensing probe rotates along an arc-shaped second rotation orbit as the second reagent dispensing arm rotates. A second reagent suction position where the second reagent dispensing probe sucks up the second reagent from the second opening of the second container in the combination bottle is provided on the second rotation orbit. The second reagent suction position corresponds to, for example, an intersection of the second rotation orbit and a second annular path (not illustrated) inside the first annular path 209. In addition, a second reagent discharge position where the second reagent sucked up by the second reagent dispensing probe is discharged to the reaction container is provided on the second rotation orbit. The second reagent discharge position corresponds to, for example, an intersection of the second rotation orbit and the reaction tube annular path.

Note that a cleaning position at which the second reagent dispensing probe is cleaned may be provided at a position different from the second reagent suction position and the second reagent discharge position on the second rotation orbit. In addition, a cleaning tank for cleaning the second reagent dispensing probe may be provided at the cleaning position.

Under the control of the control circuit 9, the second reagent dispensing probe sucks up the second reagent from the second container of the combination bottle located immediately below the second reagent suction position. Then, under the control of the control circuit 9, the second reagent dispensing probe discharges the sucked up second reagent to the reaction tube located immediately below the second reagent discharge position. The second reagent dispensing probe performs this dispensing operation, for example, once in one cycle.

The third pipetting mechanism includes a sample dispensing arm. The sample dispensing arm is vertically movable and horizontally rotatable by the drive mechanism 4. The sample dispensing arm holds a sample dispensing probe at one end.

The sample dispensing probe rotates along an arc-shaped third rotation orbit as the sample dispensing arm rotates. A first sample suction position and a second sample suction position at which the sample dispensing probe sucks up a sample from the sample container are provided on the third rotation orbit. The first sample suction position corresponds to, for example, an intersection of the third rotation orbit and the first track portion 142. The second sample suction position corresponds to, for example, an intersection of the third rotation orbit and the second track portion 144. In addition, a sample discharge position for discharging the sample sucked up by the sample dispensing probe to the reaction container is provided on the third rotation orbit. The sample discharge position corresponds to, for example, an intersection of the third rotation orbit and the reaction tube annular path.

Note that a cleaning position at which the sample dispensing probe is cleaned may be provided at a position different from the first sample suction position, the second sample suction position, and the sample discharge position on the third rotation orbit. In addition, a cleaning tank for cleaning the sample dispensing probe may be provided at the cleaning position.

Under the control of the control circuit 9, the sample dispensing probe sucks up a sample from a sample container located immediately below the first sample suction position or from a sample container located immediately below the second sample suction position. Then, under the control of the control circuit 9, the sample dispensing probe discharges the sucked up sample to the reaction tube located immediately below the sample discharge position. The sample dispensing probe performs this dispensing operation, for example, once in one cycle.

Although not illustrated in FIG. 2, the analysis mechanism 2 further includes an electrode unit, a photometric unit, a cleaning unit, and a stirring unit. The electrode unit measures the electrolyte concentration of the mixed liquid of the sample and the reagent discharged into the reaction tube. The photometric unit optically measures a predetermined component in the mixed liquid. The cleaning unit cleans the inside of the reaction tube in which the measurement of the mixed liquid is completed in the electrode unit or the photometric unit. The stirring unit includes a stirring bar, and the stirring bar stirs a sample, a reagent, a mixed liquid, and the like contained in the reaction tube located immediately below a stirring position on the reaction disk 104.

Next, each function of the control circuit 9 according to the first embodiment will be described. The control circuit 9 illustrated in FIG. 1 executes an operation program stored in the storage circuit 8 to implement a function corresponding to the program. For example, the control circuit 9 includes a system control function 91 by executing the operation program.

In the first embodiment, a case where the system control function 91 is realized by a single processor will be described, but the present invention is not limited thereto. For example, a control circuit may be configured by combining a plurality of independent processors, and the system control function 91 may be realized by each processor executing the operation program. The same applies to the following other embodiments.

With the use of the system control function 91, the control circuit 9 comprehensively controls each unit in the automatic analyzing apparatus 1 based on, for example, input information input from the input interface 5. Specifically, the control circuit 9 controls rotation operation of the reagent rack and the reaction disk 104 of the reagent storage 102, rotation operation and dispensing operation of the sample dispensing probe, rotation operation and dispensing operation of the first reagent dispensing probe, rotation operation and dispensing operation of the second reagent dispensing probe, and the like. In addition, the control circuit 9 controls the operations of the positioner 126, the code reader 127, the arm 130, the first transport tool shuttle 134, and the second transport tool shuttle 136.

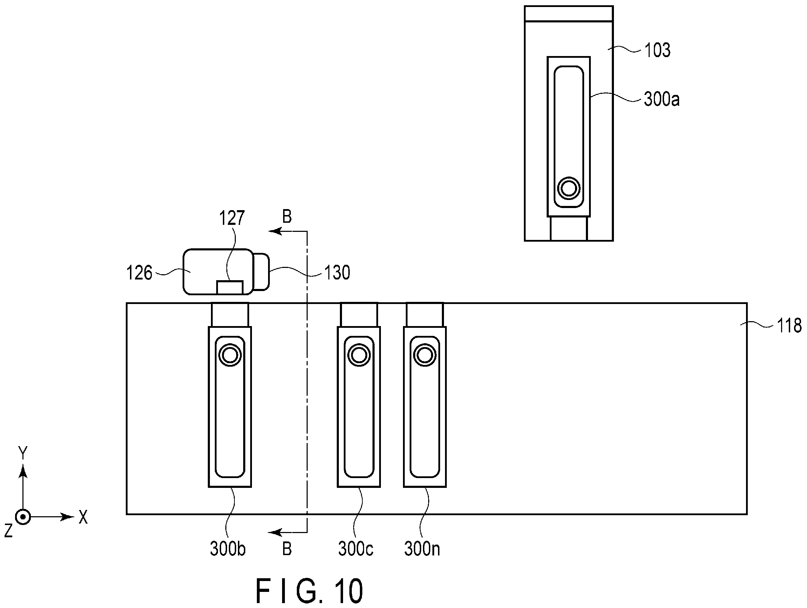

The configuration of the automatic analyzing apparatus 1 according to the first embodiment has been described above. Next, the automatic reagent loading of the automatic analyzing apparatus 1 according to the first embodiment will be described with reference to FIGS. 10 to 18.

FIG. 10 is a schematic top view of an automatic loading mechanism illustrating automatic reagent loading in the first embodiment. FIG. 10 illustrates the input unit 118, the positioner 126, the code reader 127, the arm 130, and the opening 103 which are parts of the analysis mechanism 2 in FIG. 2. In addition, in FIG. 10, the reagent bottle 300a is illustrated in the opening 103, and the reagent bottle 300b, the reagent bottle 300c, and the reagent bottle 300n are illustrated in the input unit 118. Hereinafter, with respect to the automatic reagent loading, an operation example of the automatic loading mechanism for transferring the reagent bottle 300b loaded into the input unit 118 to the opening 103 will be described.

If the reagent bottle 300b is loaded into the input unit 118, the positioner 126 moves to the vicinity of the reagent bottle 300b in order to read the code added to the reagent bottle 300b. At this time, the position at which the code is read may be, for example, the same as the position at which the reagent bottle 300b is held by the arm 130. After the positioner 126 moves, the code reader 127 reads the code added to the reagent bottle 300b.

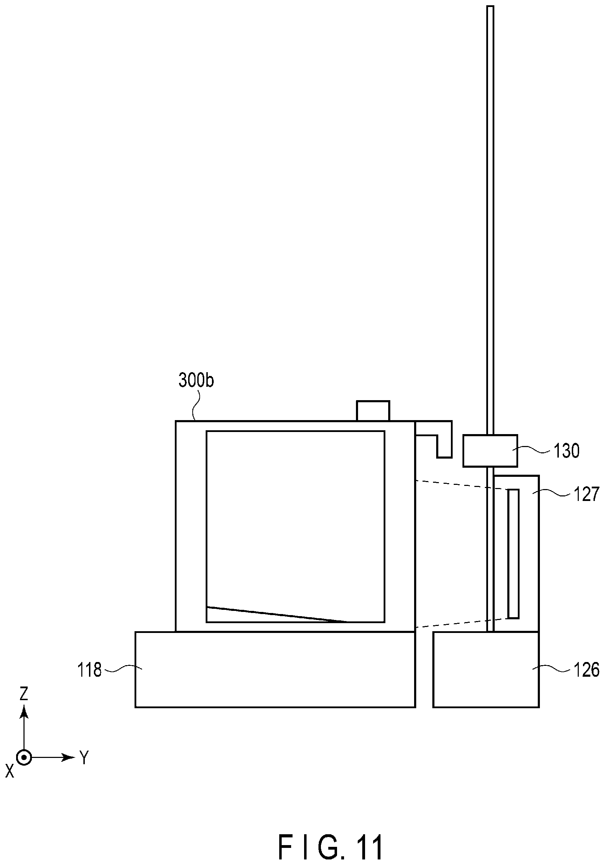

FIG. 11 is a schematic view of a cross section taken along line BB in FIG. 10 as viewed from the vertical direction. FIG. 11 illustrates a state in which the code reader 127 reads the code of the reagent bottle 300b.

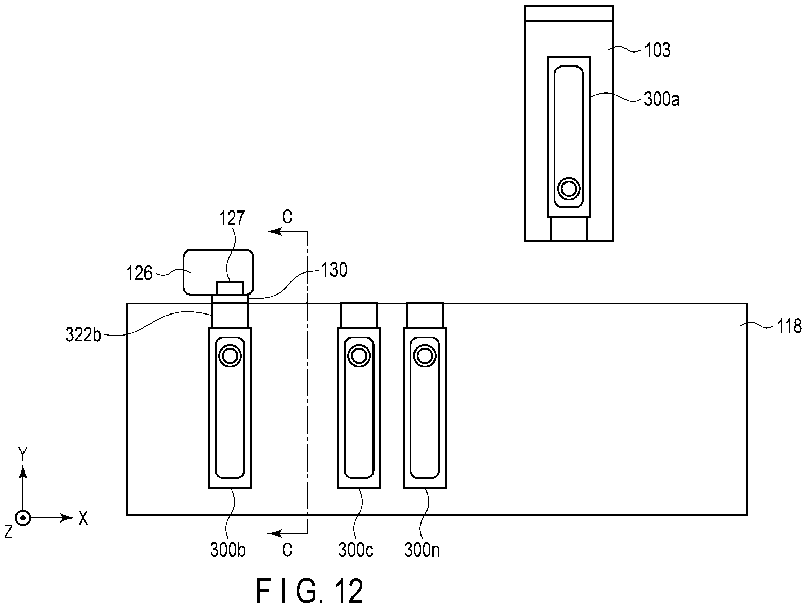

FIG. 12 is a schematic top view of the automatic loading mechanism for locking an arm and the reagent bottle according to the first embodiment. In a case where it is necessary to immediately transfer the reagent bottle 300b to the reagent storage 102 after reading the code of the reagent bottle 300b, the arm 130 is rotated in the horizontal direction to lock with the handle portion 322b of the reagent bottle 300b. Note that in a case where the arm 130 and the handle portion 322b are hooked, the arm 130 may be moved vertically and the positioner 126 may be moved. The "movement of the positioner 126" may be rephrased as "sliding of the positioner 126".

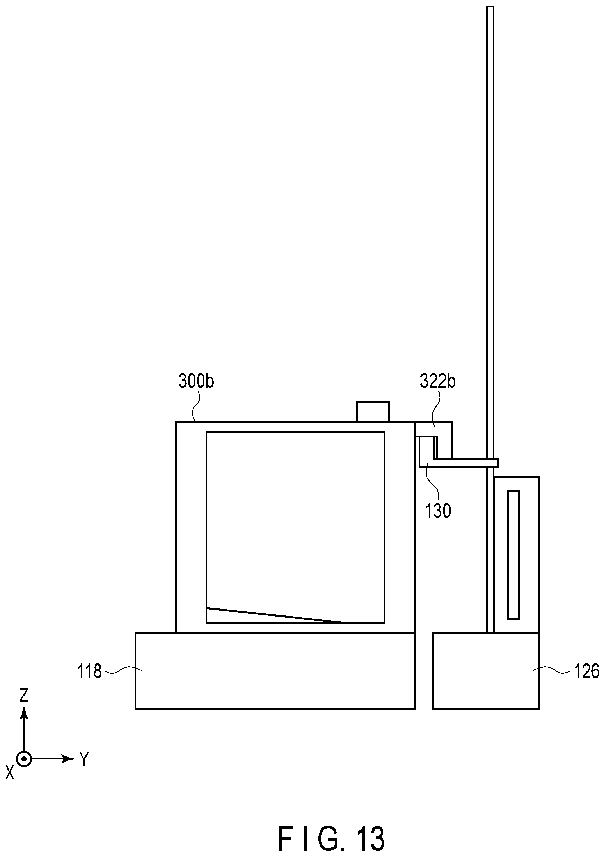

FIG. 13 is a schematic view of a cross section taken along line CC in FIG. 12 as viewed from the vertical direction. FIG. 13 illustrates a state in which the arm 130 is hooked to the handle portion 322b. After the arm 130 and the handle portion 322b are hooked, the arm 130 moves upward in the vertical direction while holding the reagent bottle 300b. Note that "moving upward" may be rephrased as "lifting up".

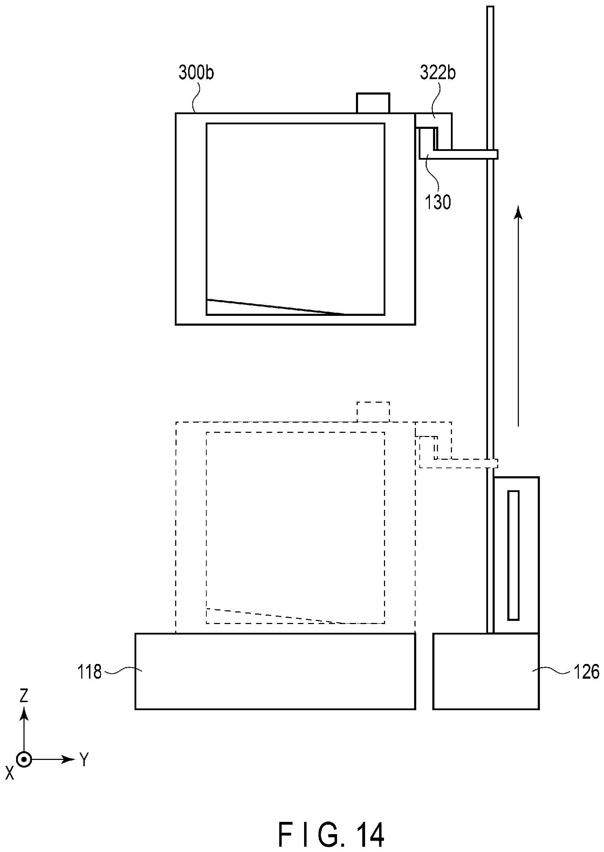

FIG. 14 is a schematic diagram illustrating vertical movement of the arm in FIG. 13. FIG. 14 illustrates a state in which the arm 130 moves upward in the vertical direction while being hooked to the handle portion 322b. After the arm 130 moves upward in the vertical direction, the arm 130 rotates in the horizontal direction.

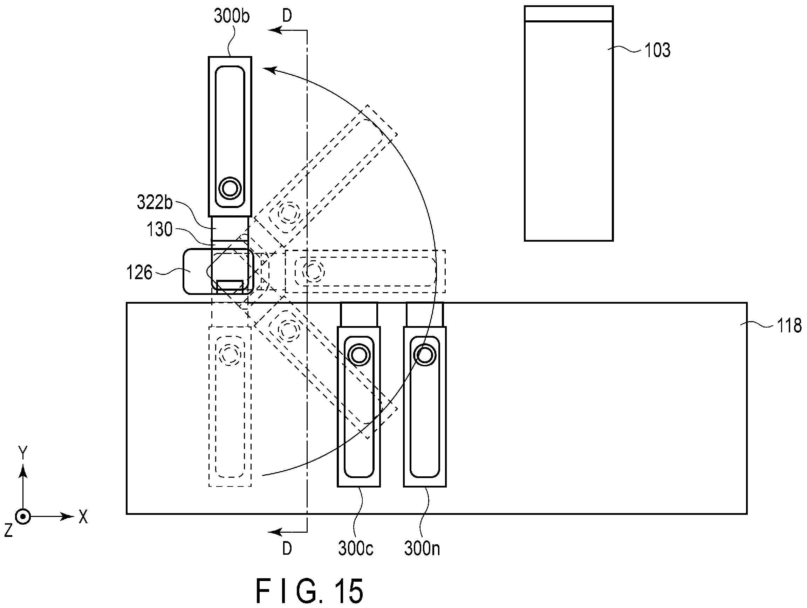

FIG. 15 is a schematic top view of the automatic loading mechanism for rotational movement of the arm that locks the reagent bottle according to the first embodiment. The arm 130 rotates the reagent bottle 300b by 180 degrees about the positioner 126 by rotating the arm 130 in the horizontal direction while being hooked to the handle portion 322b. FIG. 15 illustrates a state in which the arm 130 is rotated counterclockwise by 180 degrees. In addition, in FIG. 15, in order to install the reagent bottle 300b in the reagent storage 102, the reagent storage 102 rotates the reagent rack so that an empty slot for installing the reagent bottle 300b is positioned immediately below the opening 103. The reagent rack may be rotated at any timing.

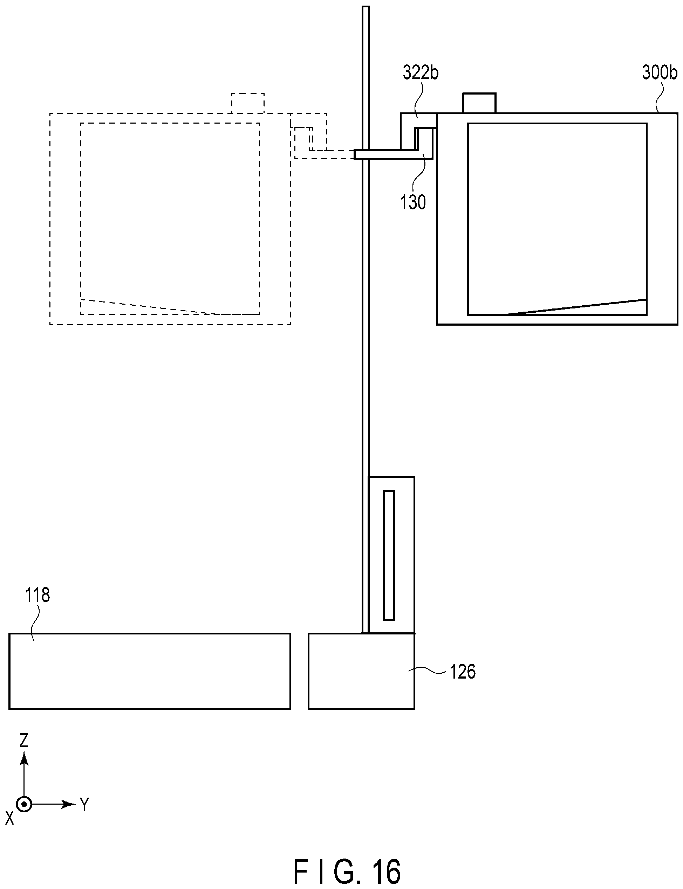

FIG. 16 is a schematic diagram of a cross section taken along line DD in FIG. 15 as viewed from the vertical direction. FIG. 16 illustrates a state in which the arm 130 hooked to the handle portion 322b is rotated by 180 degrees. After rotating the arm 130 by 180 degrees, the positioner 126 moves to the vicinity of the opening 103.

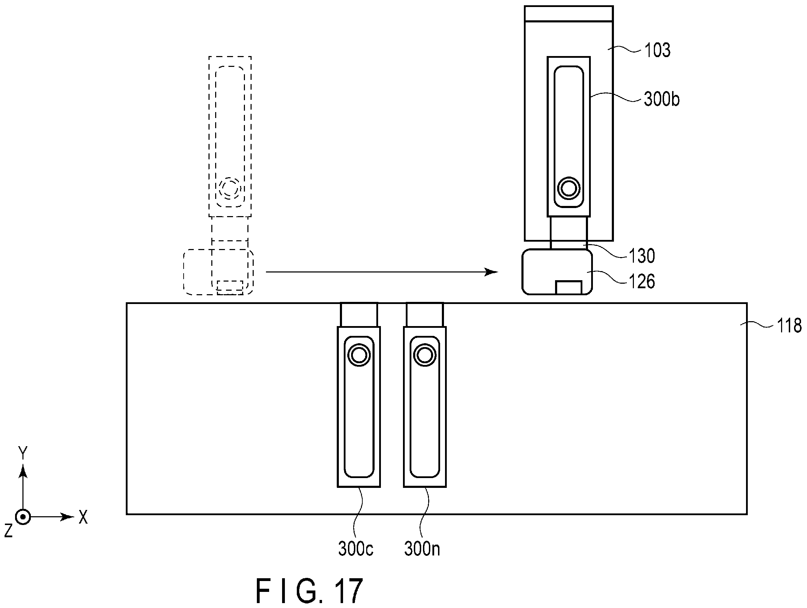

FIG. 17 is a schematic top view of the automatic loading mechanism for movement of a positioner holding the reagent bottle according to the first embodiment. The positioner 126 moves the reagent bottle 300b held by the arm 130 to the vicinity of the opening 103 in order to move the reagent bottle 300b to the opening 103. After the positioner 126 is moved, the arm 130 is moved downward in the vertical direction to install the reagent bottle 300b into the reagent storage 102 through the opening 103.

Briefly describing the above automatic reagent loading, if the reagent bottle 300 to which the adapter (general-purpose reagent bottle adapter 320) is attached is loaded into the input unit 118, the automatic loading mechanism (positioner 126 and arm 130) can transfer the reagent bottle 300 from the input unit 118 to the reagent storage 102 using the adapter. Specifically, the automatic loading mechanism can transfer the reagent bottle 300 from the input unit 118 to the reagent storage 102 using the handle portion 322 of the reagent bottle 300 (by holding the adapter in a state of being hooked to the handle portion 322). Note that the automatic loading mechanism can also transfer the reagent bottle 300 from the reagent storage 102 to the input unit 118 using the adapter as extraction processing.

As described above, the automatic analyzing apparatus according to the first embodiment includes the adapter attachable to the reagent container, the input unit that receives an adapter-attached reagent container, which is the reagent container to which the adapter is attached, the reagent storage that stores the adapter-attached reagent container, and the transfer mechanism that transfers the adapter-attached reagent container from the input unit to the reagent storage using the adapter. In addition, the automatic analyzing apparatus according to the first embodiment can use a general-purpose reagent bottle as the reagent container.

Therefore, in the automatic analyzing apparatus according to the first embodiment, for example, even in a case where a general-purpose reagent bottle is used as a reagent container, automatic reagent loading can be performed, and a reagent provided in the general-purpose reagent bottle can be used. This makes it possible to reduce the cost related to the operation of the automatic analyzing apparatus having the automatic reagent loading mechanism and improve convenience.

### (First Modification of First Embodiment)

In the automatic analyzing apparatus according to the first embodiment, the reagent bottle is transferred by locking the handle portion and the arm of the general-purpose reagent bottle adapter. However, the reagent bottle transfer unit is not limited thereto. An automatic analyzing apparatus according to a first modification of the first embodiment places a reagent bottle on a moving tray, and transfers the reagent bottle by moving the moving tray.

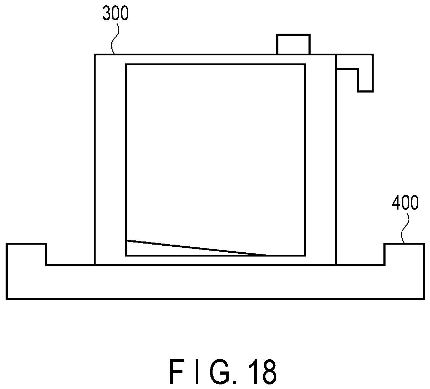

FIG. 18 is a schematic diagram illustrating an automatic loading mechanism in a first modification of the first embodiment. As illustrated in FIG. 18, the automatic analyzing apparatus according to the first modification of the first embodiment includes a moving tray 400. The moving tray 400 is configured to transfer between two predetermined points, for example. Therefore, the automatic loading mechanism in the first modification of the first embodiment may include the moving tray 400 that moves a placed reagent bottle 300.

### (Second Modification of First Embodiment)

In an automatic analyzing apparatus according to a second modification of the first embodiment, a reagent bottle is placed on a conveyor, and the conveyor is driven to transfer the reagent bottle.

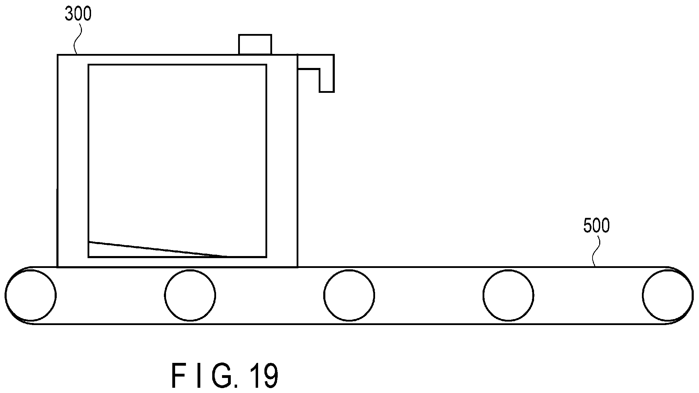

FIG. 19 is a schematic diagram illustrating an automatic loading mechanism in a second modification of the first embodiment. As illustrated in FIG. 19, the automatic analyzing apparatus according to the second modification of the first embodiment includes a conveyor 500. The conveyor 500 is, for example, a roller conveyor or a belt conveyor. Therefore, the automatic loading mechanism in the second modification of the first embodiment may include the conveyor 500 that moves a placed reagent bottle 300.

### (Third Modification of First Embodiment)

In an automatic analyzing apparatus according to a third modification of the first embodiment, a reagent bottle is adsorbed to an adsorption pad, and a reagent bottle adsorbed to the adsorption pad is transferred.

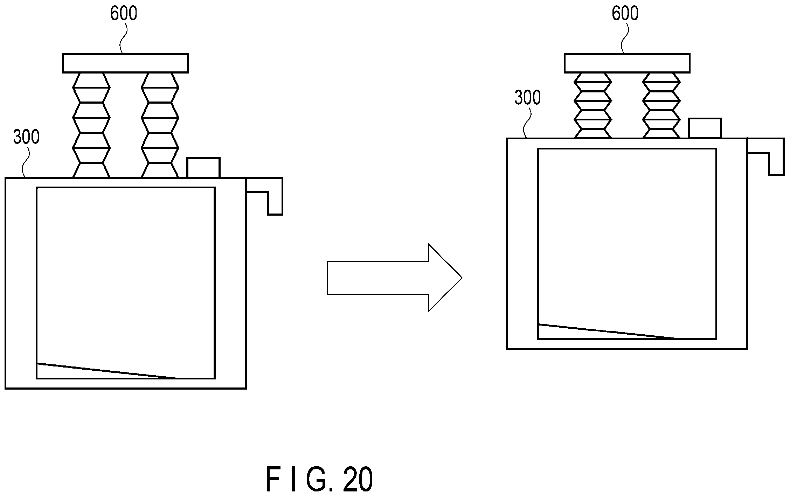

FIG. 20 is a schematic diagram illustrating an automatic loading mechanism in a third modification of the first embodiment. As illustrated in FIG. 20, the automatic analyzing apparatus according to the third modification of the first embodiment includes an adsorption pad 600. The adsorption pad 600 adsorbs an upper surface facing a surface on which a general-purpose reagent bottle adapter 320 is placed to hold a reagent bottle 300. The adsorption pad 600 is attached to a distal end of an orthogonal robot, for example. Therefore, the automatic loading mechanism in the third modification of the first embodiment may include an adsorption pad 600 that adsorbs the reagent bottle 300 and lifts up or slides and transfers the adsorbed reagent bottle 300.

### (Fourth Modification of First Embodiment)

In an automatic analyzing apparatus according to a fourth modification of the first embodiment, a protrusion is provided on an upper surface of a reagent bottle, the protrusion is gripped by a grip portion, and the reagent bottle gripping the protrusion is transferred. Since the protrusion is a portion held by a transfer mechanism (automatic loading mechanism), the protrusion may be referred to as a "held portion".

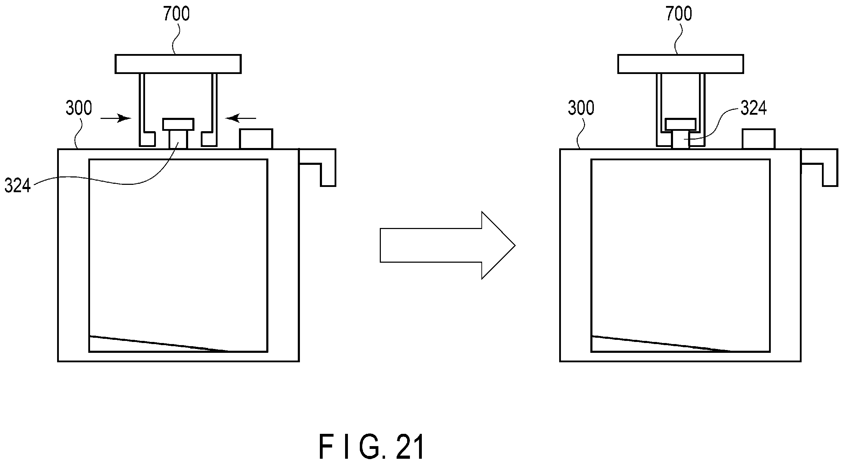

FIG. 21 is a schematic diagram illustrating an automatic loading mechanism in a fourth modification of the first embodiment. As illustrated in FIG. 21, a reagent bottle 300 further includes a protrusion 324. Specifically, the protrusion 324 is provided to protrude from an upper surface facing a surface on which a general-purpose reagent bottle adapter 320 is placed. In addition, the automatic analyzing apparatus according to the fourth modification of the first embodiment includes a grip portion 700. The grip portion 700 is configured to include a claw for gripping the protrusion 324 at a distal end of the orthogonal robot, for example. Therefore, the automatic loading mechanism in the fourth modification of the first embodiment may include the grip portion 700 that lifts up or slides and transfers the reagent bottle 300 while gripping the protrusion 324.

According to each of the above modifications, the automatic loading mechanism can be realized by using a plurality of transfer units.

According to at least one embodiment described above, it is possible to reduce the cost related to the operation of the automatic analyzing apparatus having the automatic reagent loading mechanism and improve convenience.

Note that the term "processor" used in the above description means, for example, a central processing unit (CPU), a graphics processing unit (GPU), or a circuit such as an application specific integrated circuit (ASIC), a programmable logic device (for example, a simple programmable logic device (SPLD), a complex programmable logic device (CPLD), and a field programmable gate array (FPGA)). In the case where the processor is, for example, a CPU, the processor realizes a function by reading and executing a program stored in a storage circuit. On the other hand, in a case where the processor is, for example, an ASIC, the function is directly incorporated as a logic circuit in a circuit of the processor instead of storing the program in the storage circuit. Note that each processor of the embodiment is not limited to a case where each processor is configured as a single circuit, and a plurality of independent circuits may be combined and configured as one processor to realize the function. Furthermore, a plurality of components in the drawings may be integrated into one processor to implement the function.

In addition, each function according to the embodiment can also be realized by installing a program for executing the processing on a computer such as a workstation and developing the program on a memory. At this time, the program that can cause the computer to execute the above method can also be distributed by being stored in a storage medium such as a magnetic disk (hard disk or the like), an optical disk (CD-ROM, DVD, etc.), or a semiconductor memory.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the appended claims.

## Claims

1. An automatic analyzing apparatus (1) comprising:
an adapter (320) attachable to a reagent container (310, 310A);
an input unit (118) configured to receive an adapter-attached reagent container (300), the adapter-attached reagent container (300) being the reagent container (310, 310A) to which the adapter (320) is attached;
a reagent storage (102) configured to store the adapter-attached reagent container (300); and
a transfer mechanism (126, 130) configured to transfer the adapter-attached reagent container (300) from the input unit (118) to the reagent storage (102) using the adapter (320) .

2. The automatic analyzing apparatus (1) according to claim 1, wherein
the adapter (320) includes a handle portion (322), and
the transfer mechanism (126, 130) is further configured to transfer the adapter-attached reagent container (300) from the input unit (118) to the reagent storage (102) using the handle portion (322).

3. The automatic analyzing apparatus (1) according to claim 2, wherein
the handle portion (322) is provided on a side surface of the adapter (320), and
the transfer mechanism (126, 130) is further configured to transfer the adapter-attached reagent container (300) from the input unit (118) to the reagent storage (102) by hooking and holding the adapter (320) onto the handle portion (322).

4. The automatic analyzing apparatus (1) according to claim 3, wherein
the transfer mechanism (126, 130) is further configured to transfer the adapter-attached reagent container (300) from the input unit (118) to the reagent storage (102) by lifting up or sliding the adapter-attached reagent container (300) using the adapter (320).

5. The automatic analyzing apparatus (1) according to claim 1, wherein
the adapter (320) includes a protrusion (324) provided to protrude from an upper surface facing a surface on which the adapter-attached reagent container (300) is placed, and
the transfer mechanism (126, 130) is further configured to grip the protrusion (324) and holds the adapter (320) to transfer the adapter-attached reagent container (300) from the input unit (118) to the reagent storage (102).

6. The automatic analyzing apparatus (1) according to claim 5, wherein
the transfer mechanism (126, 130) is further configured to transfer the adapter-attached reagent container (300) from the input unit (118) to the reagent storage (102) by lifting up or sliding the adapter (320).

7. The automatic analyzing apparatus (1) according to claim 1, wherein
the transfer mechanism (126, 130) is further configured to adsorb an upper surface facing a surface on which the adapter-attached reagent container (300) is placed and hold the adapter-attached reagent container (300) to transfer the adapter-attached reagent container (300) from the input unit (118) to the reagent storage (102) .

8. The automatic analyzing apparatus (1) according to claim 7, wherein
the transfer mechanism (126, 130) is further configured to transfer the adapter-attached reagent container (300) from the input unit (118) to the reagent storage (102) by lifting up or sliding the adapter-attached reagent container (300).

9. The automatic analyzing apparatus (1) according to claim 1, wherein
the transfer mechanism (126, 130) is further configured to transfer the adapter-attached reagent container (300) from the input unit (118) to the reagent storage (102) by sliding the adapter-attached reagent container (300) using a conveyor (500).

10. The automatic analyzing apparatus (1) according to claim 1, wherein
the transfer mechanism (126, 130) is further configured to transfer the adapter-attached reagent container (300) from the reagent storage (102) to the input unit (118) using the adapter (320).

11. The automatic analyzing apparatus (1) according to claim 1, wherein
at least one side surface of the reagent container (310, 310A) comprises a code (313, 313A) associated with information on a reagent,
the adapter (320) includes an opening (323c, 323a) on at least one side surface, and
the opening (323c, 323a) is located at a position corresponding to the code (313, 313A) of the reagent container (310, 310A) in a state where the reagent container (310, 310A) is attached to the adapter (320).

12. The automatic analyzing apparatus (1) according to claim 11, wherein
the transfer mechanism (126, 130) includes a code reader (127) for reading the code (313, 313A).

13. The automatic analyzing apparatus (1) according to claim 1, wherein
the input unit (118) is further configured to receive a transport tool (124) that transports a plurality of reagent containers, and
the transfer mechanism (126, 130) is further configured to transfer the transport tool (124) from the input unit (118) to a transport tool shuttle (134, 136) for transporting the transport tool (124) to an arbitrary position.

14. The automatic analyzing apparatus (1) according to claim 1, wherein
the reagent container (310, 310A) comprises a general-purpose reagent bottle.

15. The automatic analyzing apparatus (1) according to claim 1, wherein
the transfer mechanism (126, 130) includes an arm (130) that locks with the adapter (320), and a positioner (126) that transports the adapter-attached reagent container (300).
